# EUROPÄISCHE PATENTANMELDUNG

(11) **EP 0 762 674 A2**
(43) Veröffentlichungstag der Anmeldung: **12.03.1997**
(21) Anmeldenummer: 96113457.4
(22) Anmeldetag: 21.08.1996
(51) Int. Cl.: H04B 10/12

(54) **Verfahren und Schaltungsanordnung zum Übertragen von Empfangssignalen von einer Antenne zu einer Basisstation eines Funksystems**

(30) Priorität: 08.09.1995 DE 19533262
(71) Anmelder: SIEMENS AKTIENGESELLSCHAFT, 80333 München (DE)
(72) Erfinder: Stilling, Bernd, Dipl.-Ing., 81379 München (DE)

(57) **Zusammenfassung**

Zum Übertragen von Empfangssignalen von einer Antenne (A) zu einer Basisstation (BS) eines Funksystems, wobei in einer mit der Antenne (A) verbundenen Antenneneinheit (AE) optische Signale erzeugt werden, die über einen Lichtleiter (L) zur Basisstation (BS) übertragen werden. In der Basisstation (BS) wird ein optischer Träger erzeugt, der der Antenneneinheit (AE) zugeführt wird. Dort wird der optische Träger unter Verwendung eines elektro-optischen Modulators (EO) entsprechend den von der Antenne (A) kommenden Empfangssignalen moduliert und über einen Lichtleiter (L) zur Basisstation (BS) übertragen.

Durch die Erfindung sind in den Antenneneinheiten (AE) keine eigenen Laser erforderlich

## Beschreibung

Die Erfindung bezieht sich auf ein Verfahren zum Übertragen von Empfangssignalen von einer Antenne zu einer Basisstation eines Funksystems, insbesondere eines Mobilfunksystems, nach dem Oberbegriff des Patentanspruchs 1. Weiterhin bezieht sich die Erfindung auf eine Schaltungsanordnung, eine Basisstation und eine Antenneneinheit zur Durchführung des Verfahrens.

Ein Funksystem weist üblicherweise mindestens eine Basisstation auf, über die eine Funkverbindung zu einer Teilnehmerstation, beispielsweise einer Mobilstation eines Mobilfunksystems hergestellt wird. Üblicherweise sind an eine derartige Basisstation eine oder mehrere Antennen über elektrische Kabel, insbesondere Koaxkabel angeschlossen. Falls die Basisstationen verhältnismäßig groß ausgebildet sind und nicht ohne weiteres an denjenigen Stellen angebracht werden können, an denen auch die Antennen anzubringen sind, sind gelegentlich längere Kabelverbindungen erforderlich. Falls die Entfernung zwischen den Basisstationen und den Antennen verhältnismäßig groß sind, sind in der Basisstation damit große Leistungsverstärker und/oder sehr verlustarme Kabel erforderlich, so daß die Kosten entsprechend groß sind.

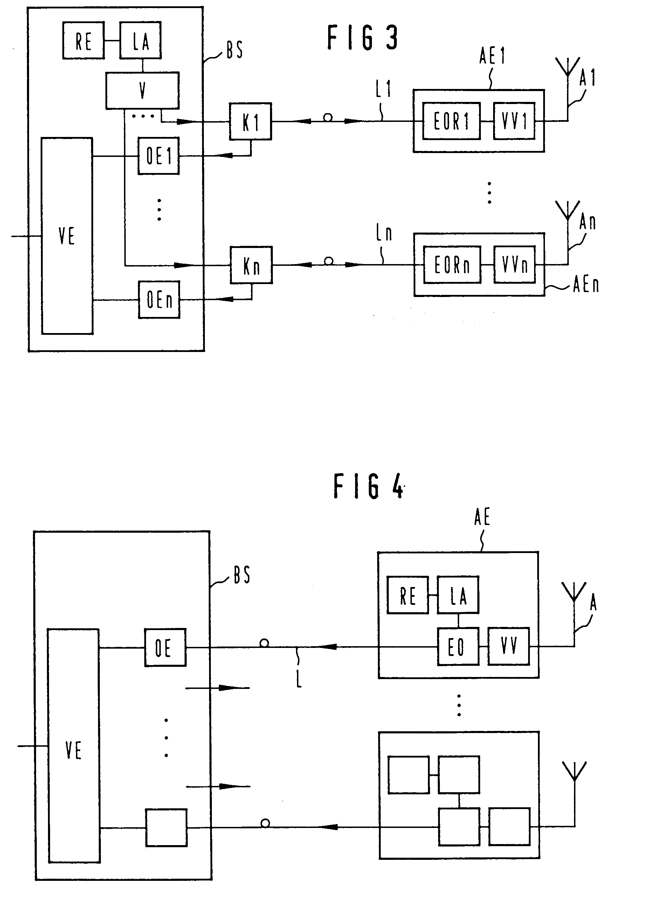

Es ist auch schon bekannt in der Basisstation einen Laser vorzusehen, dessen Ausgangslicht durch die Hochfrquenz-Sendesignale in einem E/O(electric-to-optic)-Umsetzer moduliert wird. Die modulierten Lichtsignale werden als Analogsignale dann über Lichtleiter zu einer entfernten Antenneneinheit übertragen und dort mittels eines O/E(optic-to-electric)-Umsetzers wieder in ein entsprechendes elektrisches Signal umgesetzt, das über einen Leistungsverstärker der Antenne zugeführt wird. Empfangsseitig wird, wie in FIG 4 dargestellt, in entsprechender Weise das von der Antenne A kommende Signal über einen Vorverstärker VV in der Antenneneinheit AE einem elektro-optischen Modulator EO zugeführt, der unter Verwendung eines Lasers LA und einer zugehörigen Regelung RE einen dem Empfangssignal entsprechenden modulierten optischen Träger erzeugt. Alternativ kann auch eine direkt vom Empfangssignal modulierte Laserdiode verwendet werden. Die Empfangssignale werden dann über einen Lichtleiter L einem O/E(optic-to-electric)-Umsetzer OE in der Basisstation BS zugeführt, der das Empfangssignal wieder in ein elektrisches Signal umsetzt, das dann in einer Verarbeitungseinheit VE aufbereitet wird und weitergeleitet wird. Derartige Anordnungen mit entfernten Antennen sind beispielsweise in Ichikawa H., Ohtsuka H., Murase T.: Fiber-Optic Microcell Radio System with a Spectrum Delivery Switch, IEICE Trans. Electron., Vol. E76-C, No. 2, Feb. 1993, Seiten 279 bis 286 und Shibutani M., et. al.: Feasibility Studies on an Optical Fiber Feeder System for Microcellular Mobile Communications Systems, International Communication Conference (ICC) 1991, paper 37.2, Seiten 1176 bis 1181 beschrieben.

Aufgrund der hohen Schwankungen in der Empfangsfeldstärke sind die Dynamikanforderungen an das optische Übertragungssystem jedoch sehr hoch. Bei einer Intensitätsmodulation des Lasers können daher nur Laser mit einem sehr kleinen Intensitätsrauschen (RIN, Relative Intensity Noise) eingesetzt werden. Das bedeutet, in jeder der zahlreichen entfernten Antenneneinheiten muß ein hochwertiger und damit teurer Laser einschließlich der notwendigen Regelschaltungen eingesetzt werden.

Der Erfindung liegt daher die Aufgabe zugrunde, ein Verfahren und eine Schaltungsanordnung zum Übertragen von Empfangssignalen von einer Antenne zu einer Basisstation anzugeben, die einen geringen Aufwand erfordert und die mit geringen Kosten hergestellt werden kann. Weiterhin liegt der Erfindung die Aufgabe zugrunde, eine entsprechende Basisstation und eine entsprechende Antenneneinheit anzugeben.

Erfindungsgemäß wird die Aufgabe bei dem Verfahren der eingangs genannten Art durch die im Patentanspruch 1 angegebenen Merkmale gelöst. Die Schaltungsanordnung, die Basisstation und die Antenneneinheit sind in den Patentansprüchen 7, 13 bzw. 17 angegeben. Weiterbildungen der Erfindung sind in den Unteransprüchen angegeben.

Gemäß der Erfindung wird in der Basisstation ein optischer Träger erzeugt, der der Antenneneinheit zugeführt wird und dort unter Verwendung eines elektro-optischen Modulators entsprechend den von der Antenne kommenden Empfangssignalen moduliert und über einen Lichtleiter an die Basisstation zurückübertragen wird.

Die Erfindung hat den Vorteil, daß wegen des Nichtvorhandenseins eines Lasers und einer Laserregelung in der Antenneneinheit deren Volumen und deren Leistungsaufnahme wesentlich kleiner sind. Außerdem können durch die Verwendung eines zentralen Lasers in der Basisstation die Kosten wesentlich gesenkt werden. Allerdings ist die realisierbare Entfernung zwischen der Basisstation und der Antenneneinheit kleiner als bei der herkömmlichen Lösung weil das optische Signal sonst auf dem Weg zwischen der Basisstation und der Antenneneinheit, als auch auf dem Rückweg gedämpft wird. Aufgrund der im allgemeinen kurzen Entfernung zwischen der Basisstation und der Antenneneinheit wirkt sich diese Einschränkung in der Praxis nicht negativ aus.

Für eine digitale Übertragung wurde für Teilnehmeranschlußleitungen bereits die Verwendung eines zentralen Lagers in der Vermittlungsstelle, dessen optischer Träger auf mehrere Teilnehmer verteilt wird, so daß beim Teilnehmer selbst auf einen Laser verzichtet werden kann, vorgeschlagen. Jedoch betreffen diese Lösungen nur eine digitale Übertragung mit verhältnismäßig kleinen Bitraten, so daß bei jedem Teilnehmer kostengünstige Laser eingesetzt werden können. Bei dieser Anwendung ist die zulässige Faserdämpfung auch vergleichsweise hoch. Im Gegensatz erfolgt die Übertragung zu den Antenneneinheiten in analoger Weise bei den entsprechenden Hochfrequenzen, so daß die Anforderungen an die Laser sehr viel höher sind. Außerdem ist die Entfernung zu den Antenneneinheiten im allgemeinen kürzer als bei Teilnehmeranschlußleitungen. Schaltungsanordnungen für Teilnehmerschaltungen sind beispielsweise aus Altwegg L. et. al.: A Subscriber Loop with no Optical Source at the Customer Side, ECOC 91, Seiten 609 bis 612 und Perrier P. A. et. al.: A photonic subcriber loop architecture using a single wavelength per bidirectional communication, EFOC 92, Seiten 141 bis 143 und Murphy E. J. et. al.: Simultaneous Single-Fiber Transmission of Video and Bi-directional Voice/Data Using LiNb03 Guided-Wave Devices, Journal of Lightwave Technology, Vol. 6, No. 6, June 1988, Seiten 937 bis 945 bekannt.

Verschiedene Ausführungsformen der Erfindung werden im folgenden anhand von Zeichnungen näher erläutert.

Es zeigen
- FIG 1: ein Blockschaltbild einer ersten Ausführungsform einer Schaltungsanordnung gemäß der Erfindung,
- FIG 2: ein Blockschaltbild einer zweiten Ausführungsform der Schaltungsanordnung gemäß der Erfindung,
- FIG 3: ein Blockschaltbild einer dritten Ausführungsform der Schaltungsanordnung gemäß der Erfindung, und
- FIG 4: ein Blockschaltbild einer Schaltungsanordnung nach dem Stand der Technik.

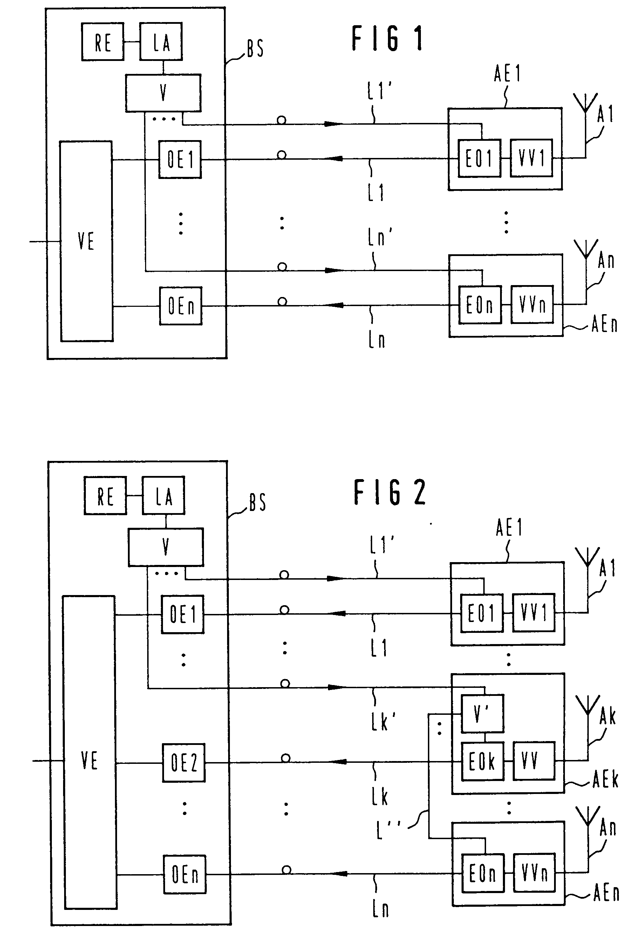

Bei der in FIG 1 dargestellten ersten Ausführungsform einer Schaltungsanordnung gemäß der Erfindung ist in der Basisstation BS ein zentraler Laser LA vorgesehen. Dieser Laser LA ist bei einer Intensitätsmodulation beispielsweise ein Festkörperlaser mit sehr kleinem RIN. Der von E/O-Umsetzern EO1 bis EOn in den Antenneneinheiten AE1 bis AEn benötigte optische Träger wird unter Verwendung der Regelung RE im Laser LA erzeugt und über einen Verzweiger V und Lichtleiter L1' bis Ln' den Antenneneinheiten AE1 bis AEn zugeführt.

In den Antenneneinheiten AE1 bis AEn sind die elektro-optische Modulatoren EO1 bis EOn vorgesehen, die den optischen Träger mit den von den Antennen A1 bis An über Vorverstärker VV1 bis VVn ankommenden Empfangssignalen modulieren. Die modulierten Trägersignale gelangen dann über jeweils einen weiteren Lichtleiter L1 bis Ln zurück zur Basisstation BS. Dort setzt jeweils ein O/E-Umsetzer OE1 bis OEn die modulierten Trägersignale wieder in die Empfangssignale um und führt sie der Verarbeitungseinheit VE zu.

Die in FIG 2 dargestellte zweite Ausführungsform unterscheidet sich von der in FIG 1 dargestellten Ausführungsform im wesentlichen dadurch, daß ein Verzweiger V' in der Antenneneinheit AEK vorgesehen ist und die Verteilung des optischen Trägers bei den Antenneneinheiten AE vorgenommen wird. Bei der Darstellung in FIG 2 werden vom Verzweiger V' die Antenneneinheiten AEK bis AEn mit dem optischen Träger versorgt. Es können selbstverständlich auch in mehreren Antenneneinheiten AE Verzweiger vorgesehen werden und damit eine ringähnliche Versorgung erfolgen, indem der optische Träger mittels eines Verzweigers von einer Antenneneinheit AE zur nächsten weitergeführt wird.

Für die Zuführung der optischen Träger zu den Antenneneinheiten AE können auch die nicht dargestellten Sendeleitungen verwendet werden. In diesem Fall erfolgt die Übertragung im Wellenlängenmultiplex, so daß keine zusätzlichen Lichtleiter L' erforderlich sind.

Bei der in FIG 3 dargestellten dritten Ausführungsform ist für die Empfangsseite ebenfalls nur jeweils ein einziger Lichtleiter L1 bis Ln erforderlich. Hierzu werden die Lichtleiter L1 bis Ln auf der Seite der Basisstation BS mit jeweils einem Koppler K1 bis Kn versehen. Damit können sowohl der optische Träger als auch das modulierte Empfangssignal über denselben Lichtleiter L übertragen werden. Die elektrooptischen Modulatoren sind in diesem Fall zweckmäßigerweise als elektro-optische Reflexions-Modulatoren EOR1 bis EORn ausgebildet.

Falls nicht-reflektierende elektro-optische Modulatoren verwendet werden, sind auf der Seite der Antenneneinheiten AE ebenfalls Koppler erforderlich.

## Patentansprüche

1. Verfahren zum Übertragen von Empfangssignalen von einer Antenne (A) zu einer Basisstation (BS) eines Funksystems, wobei in einer mit der Antenne (A) verbundenen Antenneneinheit (AE) optische Signale erzeugt werden, die über einen Lichtleiter (L) zur Basisstation (BS) übertragen werden,
**dadurch gekennzeichnet**,
daß in der Basisstation (BS) ein optischer Träger erzeugt wird, daß der optische Träger der Antenneneinheit (AE) zugeführt wird, dort unter Verwendung eines elektro-optischen Modulators (EOM) entsprechend den von der Antenne (A) kommenden Empfangssignalen moduliert und über einen Lichtleiter (L) zur Basisstation (BS) übertragen wird.

2. Verfahren nach Anspruch 1, bei der eine Mehrzahl von Antennen (A) und zugehörigen Antenneneinheiten (AE) vorgesehen ist,
**dadurch gekennzeichnet**,
daß der optische Träger von der Basisstation (BS) jeder Antenneneinheit (AE) über jeweils einen weiteren Lichtleiter (L') sternförmig zugeführt wird.

3. Verfahren nach Anspruch 1, bei der eine Mehrzahl von Antennen (A) und zugehörigen Antenneneinheiten (AE) vorgesehen ist,
**dadurch gekennzeichnet**,
daß der optische Träger von der Basisstation (BS) einer Antenneneinheit (AE) über einen weiteren Lichtleiter (L') zugeführt wird und von dieser über jeweils einen Lichtleiter (L'') mindest einer weiteren Antenneneinheit (AE) zugeführt wird.

4. Verfahren nach Anspruch 1,
**dadurch gekennzeichnet**,
daß der optische Träger von der Basisstation (BS) der Antenneneinheit (AE) über einen für eine Übertragung von Sendesignalen von der Basisstation (BS) zur Antenneneinheit (AE) vorgesehenen weiteren Lichtleiter im Wellenlängenmultiplex der Antenneneinheit (AE) zugeführt wird.

5. Verfahren nach Anspruch 1,
**dadurch gekennzeichnet**,
daß der optische Träger von der Basisstation (BS) der Antenneneinheit (AE) über denselben Lichtleiter (L) zugeführt wird, über den auch die Empfangssignale zur Basisstation (BS) übertragen werden.

6. Verfahren nach Anspruch 5,
**dadurch gekennzeichnet**,
daß als elektro-optischer Modulator ein elektro-optischer Reflexions-Modulator (EOR) verwendet wird.

7. Schaltungsanordnung zur Durchführung des Verfahrens nach Anspruch 1,
**dadurch gekennzeichnet**,
daß in der Basisstation (BS) ein Laser (LA) vorgesehen ist, der einen optischen Träger erzeugt und über einen Lichtleiter (L') an die Antenneneinheit (AE) abgibt, daß in der Antenneneinheit (AE) ein elektro-optischer Modulator (EO, EOR) vorgesehen ist, der den in der Basisstation (BS) erzeugten optischen Träger entsprechend den von der Antenne (A) kommenden Empfangssignalen moduliert und über einen Lichtleiter (L1) an die Basisstation (BS) überträgt.

8. Schaltungsanordnung nach Anspruch 7, bei der eine Mehrzahl von Antennen (A) und zugehörigen Antenneneinheiten (AE) vorgesehen ist,
**dadurch gekennzeichnet**,
daß dem Laser (LA) ein Verzweiger (V) nachgeschaltet ist, der den optischen Träger von der Basisstation (BS) jeder Antenneneinheit (AE) über jeweils einen weiteren Lichtleiter (L') sternförmig zuführt.

9. Schaltungsanordnung nach Anspruch 7, bei der eine Mehrzahl von Antennen (A) und zugehörigen Antenneneinheiten (AE) vorgesehen ist,
**dadurch gekennzeichnet**,
daß zumindest eine der Antenneneinheiten (AE) einen weiteren Verzweiger (V') enthält über den der von der Basisstation (BS) über einen weiteren Lichtleiter (L') zu ihr übertragene optische Träger zumindest einer weiteren Antenneneinheit (AE) zugeführt wird.

10. Schaltungsanordnung nach Anspruch 7, bei der die Sendesignale von der Basisstation (BS) über einen Lichtleiter zur Antenneneinheit (AE) übertragen werden,
**dadurch gekennzeichnet,**
daß der Lichtleiter auch für eine Übertragung des optischen Trägers im Wellenlängenmultiplex zur Antenneneinheit (AE) vorgesehen ist.

11. Schaltungsanordnung nach Anspruch 7,
**dadurch gekennzeichnet**,
daß Koppler (K) vorgesehen sind, unter deren Verwendung der optische Träger von der Basisstation (BS) der Antenneneinheit (AE) über denselben Lichtleiter (L) zugeführt wird, über den auch die Empfangssignale zur Basisstation (BS) übertragen werden.

12. Schaltungsanordnung nach Anspruch 11,
**dadurch gekennzeichnet**,
daß der elektro-optische Modulator als ein elektro-optischer Reflexions-Modulator (EOR) ausgebildet ist.

13. Basisstation zur Durchführung des Verfahrens nach Anspruch 1,
**dadurch gekennzeichnet**,
daß sie einen Laser (LA) enthält, der einen optischen Träger erzeugt und über einen Lichtleiter (L') an die Antenneneinheit (AE) abgibt.

14. Basisstation nach Anspruch 13, an der eine Mehrzahl von Antennen (A) und zugehörigen Antenneneinheiten (AE) anschließbar ist,
**dadurch gekennzeichnet**,
daß dem Laser (LA) ein Verzweiger (V) nachgeschaltet ist, der den optischen Träger von der Basisstation (BS) jeder Antenneneinheit (AE) über jeweils einen weiteren Lichtleiter (L') sternförmig zuführt.

15. Antenneneinheit zur Durchführung des Verfahrens nach Anspruch 1,
**dadurch gekennzeichnet**,
daß sie einen elektro-optischen Modulator (EO) enthält, der den in der Basisstation (BS) erzeugten optischen Träger entsprechend den von der Antenne (A) kommenden Empfangssignalen moduliert und an einen Lichtleiter (L) abgibt.

16. Antenneneinheit nach Anspruch 15,
**dadurch gekennzeichnet**,
daß sie einen weiteren Verzweiger (V') enthält, über den der von der Basisstation (BS) zu ihr übertragene optische Träger mindest einer weiteren Antenneneinheit (AE) zuführbar ist.

17. Antenneneinheit nach Anspruch 15 oder Anspruch 16,
**dadurch gekennzeichnet**,
daß der elektro-optische Modulator als ein elektro-optischer Reflexions-Modulator (EOR) ausgebildet ist.
